# EUROPEAN PATENT APPLICATION

(11) **EP 0 661 372 A1**
(43) Date of publication of application: **05.07.1995**
(21) Application number: 93203726.0
(22) Date of filing: 30.12.1993
(51) Int. Cl.: C10K 1/10, C10K 1/34, C01B 3/52, C01B 3/54

(54) **Removing contaminants from synthesis gas**

(71) Applicant: SHELL INTERNATIONALE RESEARCH MAATSCHAPPIJ B.V., NL-2596 HR Den Haag (NL)
(72) Inventor: Zuideveld, Pieter Lammert, NL-2596 HR s'-Gravenhage (NL); Heyman, Eva Christina, NL-2596 HR s'-Gravenhage (NL)

(57) **Abstract**

Process of removing contaminants such as ammonia from synthesis gas obtained from partly oxidizing in a gasification reactor (2) a carbonaceous feed (1) comprising the steps of scrubbing (18) the synthesis gas with water (20) to obtain a first ammonia-containing aqueous stream (22) and a partly treated synthesis gas (24); stripping (25) the first ammonia-containing aqueous stream (22) with steam (26) to obtain an ammonia-containing gaseous stream (30) and a treated aqueous stream (20); scrubbing the ammonia-containing gaseous stream (35) with water (37) to obtain a treated gaseous stream (38) and a second ammonia-containing aqueous stream (40); and supplying the second ammonia-containing aqueous stream (40) to the gasification reactor (2).

## Description

The present invention relates to a process of removing contaminants such as ammonia from synthesis gas obtained from partly oxidizing in a gasification reactor a carbonaceous feed comprising the steps of
(a) scrubbing the synthesis gas with water to obtain an ammonia-containing aqueous stream and a partly treated synthesis gas; and
(b) stripping the ammonia-containing aqueous stream with steam in a stripper column to obtain an ammonia-containing gaseous stream and a treated aqueous stream.

The treated aqueous stream is substantially free from ammonia, and if required this treated aqueous stream can be further treated.

It is an object of the present invention to add a simple process to the known process to remove ammonia from the ammonia-containing gaseous stream obtained in step (b).

To this end the process of removing contaminants such as ammonia from synthesis gas obtained from partly oxidizing in a gasification reactor a carbonaceous feed according to the invention comprises the steps of
(a) scrubbing the synthesis gas with water to obtain a first ammonia-containing aqueous stream and a partly treated synthesis gas;
(b) stripping the first ammonia-containing aqueous stream with steam in a stripper column to obtain a ammonia-containing gaseous stream and a treated aqueous stream;
(c) scrubbing the ammonia-containing gaseous stream with water to obtain a treated gaseous stream and a second ammonia-containing aqueous stream; and
(d) supplying the second ammonia-containing aqueous stream to the gasification reactor.

Although in the gasification reactor ammonia is formed, feeding ammonia to the gasification reactor does not result in an increase of the concentration of ammonia in the gaseous mixture leaving gasification reactor, see UK patent application publication No. 2 177 110. It is believed that the ammonia formed in the gasification reactor originates from nitrogen atoms in the feed, that ammonia supplied to the gasification reactor is converted to molecular nitrogen and water, and that the molecular nitrogen is inert.

Moreover as the ammonia concentration in the second aqueous stream is larger than the ammonia concentration in the first aqueous stream, the additional step (c) produces a more concentrated ammonia-containing aqueous stream that is supplied to the gasification reactor. Thus supplying the aqueous stream obtained in step (c) to the gasification reactor provides a simple way of removing ammonia from this stream.

The synthesis gas will also contain hydrogen cyanide, and some hydrogen cyanide will be absorbed in the water used to scrub the synthesis gas in step (a). Suitably the bulk of the hydrogen cyanide is removed catalytically from the partly treated gas obtained in step (a). To this end the partly treated synthesis gas is contacted in a reactor in the presence of water with a hydrolysis catalyst, wherein downstream of the reactor excess water is removed from the synthesis gas to obtain further treated synthesis gas, and wherein the removed water is supplied to the stripper column. As ammonia is a product of the hydrolysis of hydrogen cyanide, this removed water will contain absorbed ammonia.

In the hydrolysis reactor compounds such as carbonyl sulphide and carbon disulphide will be hydrolysed as well.

The invention will now be described by way of example in more detail with reference to the accompanying drawings, wherein
Figure 1 shows schematically a process line-up of a first embodiment of the invention; and
Figure 2 shows schematically a process line-up of a second embodiment of the invention.

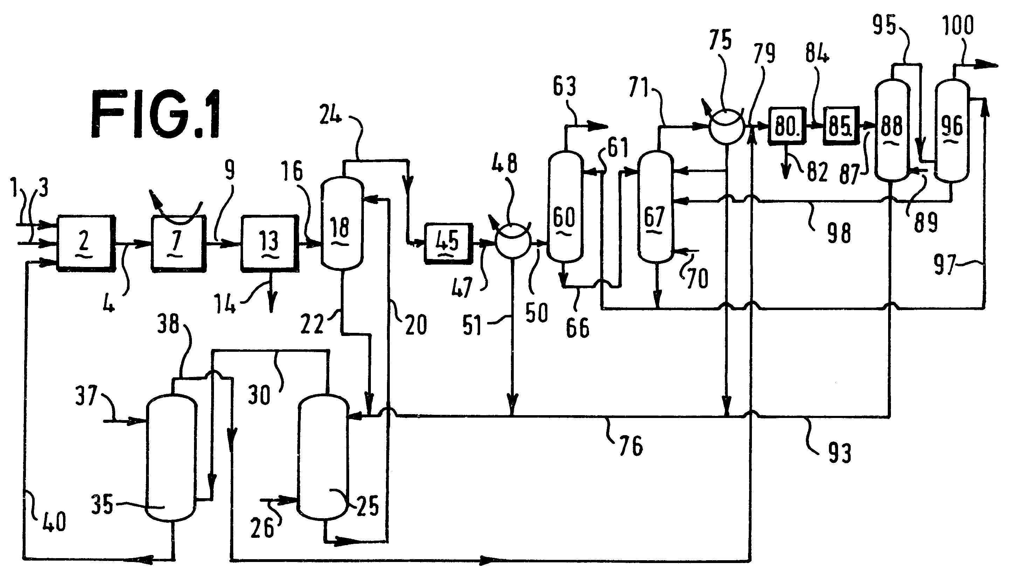

Reference is made to Figure 1. A carbonaceous feed, such as coal, hydrocarbon oil, petroleum coke or natural gas, is supplied through conduit 1 to gasification reactor 2. In the gasification reactor 2 the carbonaceous feed is partly oxidized with an oxidant supplied through conduit 3 to obtain a synthesis gas including carbon monoxide and hydrogen. The oxidant can be steam or a free oxygen-containing gas such as oxygen, air, or oxygen enriched air. The formed synthesis gas is withdrawn through conduit 4. The conditions in the gasification reactor are known and will not be described here.

This synthesis gas is contaminated with solids and gaseous contaminants such as ammonia, hydrogen sulphide, hydrogen cyanide and carbonyl sulphide. These contaminants have to be removed. To this end the synthesis gas is first cooled in cooler 7 to a temperature at which the solids can be removed. Cooled synthesis gas is passed through conduit 9 to unit 13 for dry removal of solids from the gas. The solids are discharged from the solids removal unit 13 through conduit 14, and synthesis gas from which solids have been removed is withdrawn through conduit 16.

This synthesis gas is scrubbed with water in first scrubber 18, which water is supplied through conduit 20. The amount of water is so selected that the synthesis gas is cooled to a predetermined temperature. The ammonia present in the synthesis gas is absorbed in the water so that a first ammonia-containing aqueous stream is obtained. Partly treated synthesis gas is withdrawn from the first scrubber 18 through conduit 24 for further treatment. This further treatment will be discussed later.

The first ammonia-containing aqueous stream is passed from the first scrubber 18 through conduit 22 to a stripper column 25. In the stripper column 25 the ammonia-containing aqueous stream is stripped with steam supplied through conduit 26. Stripping the ammonia-containing aqueous stream produces an ammonia-containing gaseous stream and a treated aqueous stream which treated aqueous stream is supplied to scrubber 18 through conduit 20. The stripper column 25 is sometimes referred to as the sour water stripper.

The ammonia-containing gaseous stream is supplied through conduit 30 to a second scrubber 35. In the second scrubber 35 the ammonia-containing gaseous stream is scrubbed with water supplied through conduit 37 to obtain a second ammonia-containing aqueous stream and a treated gaseous stream which is withdrawn from the second scrubber 35 through conduit 38. The amount of water is so selected that it is sufficient to remove the ammonia concentrated in an aqueous stream. The second ammonia-containing aqueous stream is supplied through conduit 40 to the gasification reactor 2. As the amount of water required to absorb ammonia is much smaller than the amount of water required to cool the synthesis gas, the ammonia concentration in the aqueous stream supplied to the gasification reactor 2 is much higher.

The partly treated synthesis gas withdrawn from the first scrubber 18 is passed through conduit 24 to a reactor 45. In the reactor 45 partly treated synthesis gas is contacted in the presence of water with a hydrolysis catalyst to hydrolyse carbonyl sulphide and hydrogen cyanide. The conditions in the hydrolysis reactor are known and will not be discussed here. An example of a suitable hydrolysis catalyst is a titania-containing catalyst as described in UK patent specification No. 2 159 132.

The gas stream is withdrawn from the reactor 45 through conduit 47. In condensor 48 excess water is removed from the gas stream, and this water contains ammonia from hydrolysing hydrogen cyanide. Further treated synthesis gas is passed from the condensor 48 through conduit 50. The removed water is passed through conduit 51 to the stripper column 25 where ammonia is removed in the same way as it was removed from the first ammonia-containing aqueous stream from the first scrubber column 18.

To remove hydrogen sulphide from it, further treated synthesis gas is contacted in absorption column 60 with a lean absorbent solution supplied through conduit 61 to obtain purified synthesis gas and loaded absorbent solution. Purified synthesis gas is withdrawn through conduit 63. Loaded absorbent solution is passed through conduit 66 to regeneration column 67 where it is regenerated by stripping the absorbent solution with steam supplied through conduit 70 to obtain lean absorbent solution which is returned through conduit 61 and a gas enriched in hydrogen sulphide which is withdrawn through conduit 71. The conditions in the absorption column and in the regeneration column are known and will not be discussed here.

Water is removed from the gas in condensor 75, and part of the water is supplied through conduit 76 to the stripper column 25 where ammonia is removed in the same way as it is removed from the first ammonia-containing aqueous stream from the first scrubber column 18.

After removing water in condensor 75 the gas enriched in hydrogen sulphide is supplied through conduit 79 to a Claus plant 80 where hydrogen sulphide is converted to elemental sulphur which is withdrawn through conduit 82. A Claus plant and its operation are known and will not be discussed here.

The gas leaving the Claus plant 80 through conduit 84 is subjected to a reduction treatment in reactor 85 to reduce in the presence of a reducing gas, such as hydrogen, sulphur compounds other than hydrogen sulphide to obtain a gas containing hydrogen sulphide. A suitable catalyst is a cobalt-molybdenum catalyst. The conditions in the reactor are known and will not be discussed here. The reduced gas withdrawn through conduit 87 is cooled in cooler 88 by contacting it directly with water supplied through conduit 89. After contacting the water is supplied through conduit 93 to the stripper column 25 where ammonia is removed in the same way as it is removed from the first ammonia-containing aqueous stream from the first scrubber column 18.

After cooling the gas is supplied through conduit 95 to an absorption column 96 in which the gas is contacted with a lean absorbent solution to obtain loaded absorbent solution supplied through conduit 97 to remove hydrogen sulphide from the gas. After contacting loaded absorption solution is supplied through conduit 98 to regeneration column 67 for regeneration. After contacting gas is withdrawn from the absorption column 96 through conduit 100. The conditions in the absorption column are known and will not be discussed here.

Suitably the treated gaseous stream obtained in the second scrubber 35 is passed through conduit 38 to the inlet of the Claus plant 80 to remove any sulphur components from this stream.

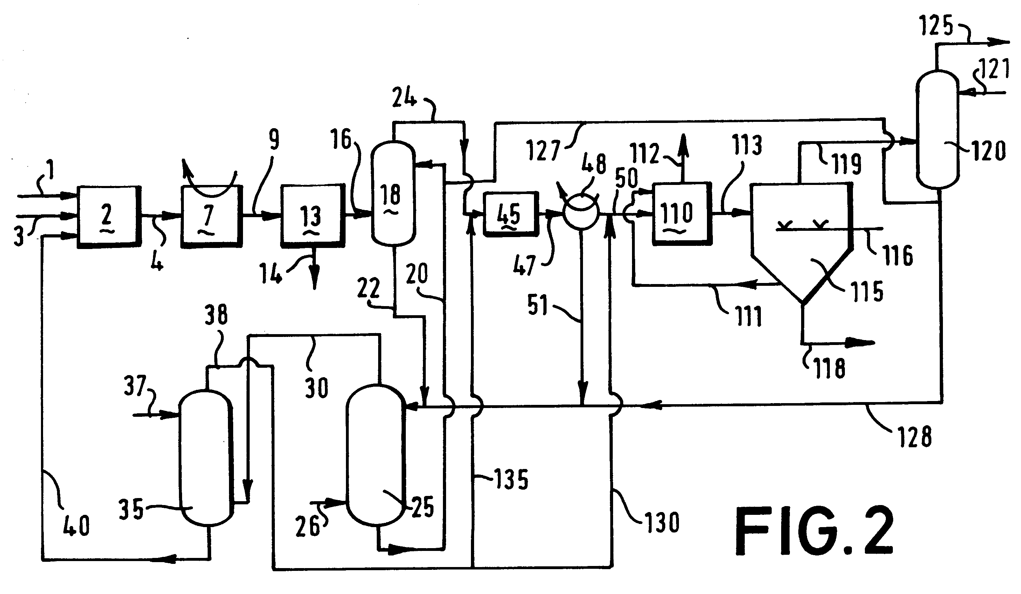

Reference is now made to Figure 2 showing a second embodiment of the present invention. Features which are similar to the ones described with reference to Figure 1 have got the same reference numerals. Further treated synthesis gas is passed from the condensor 48 through conduit 50 to a contactor 110. In contactor 110 the further treated synthesis gas is contacted with an aqueous reactant solution to oxidize hydrogen sulphide to elemental sulphur to obtain purified synthesis gas and spent reactant solution. The aqueous reactant solution is supplied to contactor 110 through conduit 111, the purified synthesis gas is withdrawn through conduit 112 and spent reactant solution is withdrawn from the contactor 110 through conduit 113. The aqueous reactant solution suitably contains a complex of Fe(III) with a chelating agent in the form of an organic acid such as nitrilotriacetic acid. The conditions to oxidize hydrogen sulphide to elemental sulphur are known and will not be discussed here.

Spent reactant solution is regenerated in regenerator 115 by stripping it with air supplied through conduit 116. From the regenerator are withdrawn regenerated reactant solution through conduit 111, a stream rich in elemental sulphur through conduit 118, and spent air through conduit 119. The conditions to oxidize Fe(II) to Fe(III) are known and will not be discussed here. Regenerated reactant solution is supplied through conduit 111 to the contactor 110.

To remove ammonia from spent air, it is scrubbed with water in third scrubber 120 to obtain an aqueous stream, which water is supplied to the third scrubber 120 through conduit 121. Treated spent air is withdrawn from the third scrubber 120 through conduit 125, and the aqueous stream is withdrawn through conduit 127. The aqueous stream can be passed to the first scrubber 18 for scrubbing the synthesis gas. Alternatively the aqueous stream is passed through conduit 128 to the stripper column 25.

Suitably the treated gaseous stream obtained in the second scrubber 35 is passed through conduits 38 and 130 to the inlet of the contactor 110 to remove any sulphur components from this stream. In case the treated gaseous stream contains carbonyl sulphide it is suitably passed through conduits 38 and 135 to the reactor 45 containing the hydrolysis catalyst.

## Claims

1. Process of removing contaminants such as ammonia from synthesis gas obtained from partly oxidizing in a gasification reactor a carbonaceous feed comprising the steps of
(a) scrubbing the synthesis gas with water to obtain a first ammonia-containing aqueous stream and a partly treated synthesis gas;
(b) stripping the first ammonia-containing aqueous stream with steam in a stripper column to obtain an ammonia-containing gaseous stream and a treated aqueous stream;
(c) scrubbing the ammonia-containing gaseous stream with water to obtain a treated gaseous stream and a second ammonia-containing aqueous stream; and
(d) supplying the second ammonia-containing aqueous stream to the gasification reactor.

2. Process as claimed in claim 1, wherein the partly treated synthesis gas is contacted in a reactor in the presence of water with a hydrolysis catalyst, wherein downstream of the reactor excess water is removed from the synthesis gas to obtain further treated synthesis gas, and wherein the removed water is supplied to the stripper column.

3. Process as claimed in claim 2, wherein the further treated synthesis gas is contacted with a lean absorbent solution to obtain purified synthesis gas and loaded absorbent solution, which loaded absorbent solution is regenerated by stripping the absorbent solution to obtain lean absorbent solution and a gas enriched in hydrogen sulphide, wherein water is removed from the gas, and wherein at least part of the water is supplied to the stripper column.

4. Process as claimed in claim 3, wherein after removing water, the gas enriched in hydrogen sulphide is supplied to a Claus plant where hydrogen sulphide is converted to elemental sulphur which is removed, wherein the gas leaving the Claus plant is subjected to a reduction treatment to reduce sulphur compounds other than hydrogen sulphide to obtain a gas containing hydrogen sulphide, which gas is cooled by contacting it directly with water which is supplied to the stripper column, and wherein the gas after cooling is contacted with a lean absorbent solution to obtain loaded absorbent solution which is subsequently regenerated.

5. Process as claimed in claim 4, wherein the treated gaseous stream obtained in step (c) is supplied to the Claus plant.

6. Process as claimed in claim 2, wherein the further treated synthesis gas is contacted in a contactor with an aqueous reactant solution to oxidize hydrogen sulphide to elemental sulphur to obtain purified synthesis gas and spent reactant solution, which spent reactant solution is regenerated by stripping it with air, and wherein spent air is scrubbed with water to obtain an aqueous stream which is supplied to the stripper column.

7. Process as claimed in claim 2, wherein the further treated synthesis gas is contacted in a contactor with an aqueous reactant solution to oxidize hydrogen sulphide to elemental sulphur to obtain purified synthesis gas and spent reactant solution, which spent reactant solution is regenerated by stripping it with air, and wherein spent air is scrubbed with water to obtain an aqueous stream.

8. Process as claimed in claim 7, wherein the aqueous stream is used in step (a) to scrub the synthesis gas.

9. Process as claimed in claim 7, wherein the aqueous stream is supplied to the stripper column.

10. Process as claimed in anyone of the claims 6-9, wherein the treated gaseous stream obtained in step (c) is supplied to the contactor.

11. Process as claimed in anyone of the claims 6-10, wherein the treated gaseous stream obtained in step (c) is supplied to the reactor containing the hydrolysis catalyst.
